# EUROPEAN PATENT APPLICATION

(11) **EP 4 472 092 A1**
(43) Date of publication of application: **04.12.2024**
(21) Application number: 23176628.8
(22) Date of filing: 01.06.2023
(51) Int. Cl.: H04B 7/0404, H04B 7/06

(54) **DYNAMIC UPLINK MIMO CONFIGURATION OF A TERMINAL DEVICE**

(71) Applicant: Deutsche Telekom AG, 53113 Bonn (DE)
(72) Inventor: XU, Bangnan, 64291 Darmstadt (DE)
(74) Representative: RDL Patentanwälte PartG mbB

(57) **Abstract**

A method for operating a terminal device, wherein a terminal device transmits data to a base transceiver station, BTS, of a cellular network via a wireless connection using a first antenna of the terminal device, a terminal device, a base transceiver station for cellular network and respective computer program products.

## Description

The invention relates to a method for operating a terminal device, wherein a terminal device transmits data to a base transceiver station, BTS, of a cellular network via a wireless connection using a first antenna of the terminal device. The invention further relates to a terminal device, a base transceiver station and respective computer program products.

The wireless connection used by the terminal device for transmitting data to the base transceiver station, i.e. uploading the data, may also be called an uplink. The terminal device comprises at least one antenna which is called the first antenna herein. The first antenna enables the terminal device to establish the wireless connection to the base transceiver station and transmit the data.

A smartphone, a tablet and a notebook each of which may also be called user equipment, UE, are exemplary terminal devices. The base transceiver station is understood as an access point of the cellular network. The access point provides wireless connections to terminal devices located within an area surrounding the base transceiver station. The area covered by the base transceiver station is usually called a radio cell.

In relevant cases both the terminal device and the base transceiver station comprise more than one antenna, i.e. a first antenna and one or more than one second antennas. The antennas allow for the terminal device and the base transceiver station, respectively, to be operated in a so called multiple input multiple output, MIMO, configuration. The plurality of antennas is commonly called a MIMO antenna array.

When being operated in a MIMO configuration, at least one second antenna is additionally used for the wireless connection which may result in a higher bitrate of the wireless connection. However, using more than one antenna requires a higher electric power than using one antenna only.

In order to prevent a battery of the terminal device from being discharged quickly, the terminal device is usually configured by a manufacturer of the terminal device not to use any second antenna, i.e. to avoid a MIMO configuration, for uploading data. Unfortunately, using one antenna only may result in long upload times and an unsatisfied user of the terminal device.

It is, therefore, an object of the invention to suggest a method for operating a MIMO capable terminal device which allows for both short upload times and/or high uplink bitrates and a low electric energy consumption of the terminal device. Further objects of the invention are to provide a terminal device, a base transceiver station for a cellular network and respective computer program products.

One aspect of the invention is a method for operating a terminal device, wherein a terminal device transmits data to a base transceiver station, BTS, of a cellular network via a wireless connection using a first antenna of the terminal device. The terminal device wirelessly connects to the BTS and uploads the data to a target node accessible via the cellular network, the wireless connection forming an uplink to the cellular network.

According to the invention, an uplink control module creates an uplink multiple input multiple output, MIMO, configuration of the terminal device causing the terminal device to activate and deactivate, respectively, a second antenna of the terminal device to be additionally used for transmitting the data to the base transceiver station, the uplink MIMO configuration being dynamically created dependent on a determined current need for a bitrate of the wireless connection and a determined current contribution of the second antenna to the currently needed bitrate of the wireless connection. The uplink control module allows for dynamically configuring a MIMO antenna array of the terminal device, the MIMO antenna array comprising the first antenna and at least one second antenna. The uplink MIMO configuration created by the uplink control module varies dynamically and specifies whether the at least one second antenna is used for transmitting the data or not.

The bitrate of the wireless connection may be called an uplink capacity of the wireless connection. The higher the bitrate, the higher is a throughput of data via the wireless connection. In contrast, the lower the bitrate, the lower is a throughput of data via the wireless connection. The throughput of data indicates an amount of transmitted data per transmission time.

The created uplink MIMO configuration generally varies over time and depends, on the one hand, on a currently occurring data rate of the data to be transmitted, and, on the other hand, on a possibility of supporting a bitrate corresponding to the currently occurring data rate.

The dynamic variation of the uplink MIMO configuration avoids a consumption of additional electric energy when the second antenna is not needed and only allows for spending an additional electric energy when the second antenna is needed and beneficial for the needed bitrate. Accordingly, upload times are short and/or uplink bitrates are high and an electric energy consumption of the terminal device is as low as possible.

Preferably, the created uplink MIMO configuration causes the terminal device to activate the second antenna when using only the first antenna does not provide the currently needed bitrate and using additionally the second antenna increases the bitrate and/or to deactivate the second antenna when using only the first antenna provides the currently needed bitrate or using additionally the second antenna does not increase the bitrate. In other words, the second antenna is used in case the first antenna on its own does not support the needed bitrate and the second antenna is beneficial for the bitrate. In contrast, the second antenna is not used in case the first antenna on its own supports the needed bitrate or the second antenna is not beneficial for the bitrate.

Advantageously, determining the current need comprises determining a current rate of the data to be transmitted and/or determining the current contribution comprises determining a current load of the base transceiver station and/or a current quality of the wireless connection. The currently needed bitrate corresponds to a current rate of data to be transmitted. Both the current load of the base transceiver station and the radio quality affect the contribution of the second antenna. The lower the load of the base transceiver station, the higher the possible bitrate of the wireless connection is. The lower the quality of the wireless connection, the lower the possible bitrate of the wireless connection is. Particularly, the quality of the wireless connection might even be insufficient for the MIMO configuration due to poor radio conditions, i.e. the wireless connection might not be suitable for the MIMO configuration.

Determining the current quality of the wireless connection may comprise taking into account a number of radio resource blocks allocated to the wireless connection by the base transceiver station, a transmission power applied by the terminal device and/or the base transceiver station, a signal to interference and noise ratio, SINR, measured by the terminal device and/or the base transceiver station, a channel quality indicator, CQI, provided by the terminal device, a reference signal received power, RSRP, measured by the terminal device, a MIMO rank indicator, MIMO RI, calculated by the terminal device and/or the base transceiver station and/or a priority assigned to the wireless connection by the base transceiver station. The listed factors are exemplary only and not exhaustive. Further factors may be taken into account when determining the current quality of the wireless connection.

It is noted that the first antenna and the second antenna use the same radio resource blocks, RB. The base transceiver station must not allocate additional radio resource blocks to the wireless connection when the second antenna is active. On the other hand, using the second antenna may increase the rate of signal interferences adversely affecting not only the wireless connection but also a radio cell of the base transceiver station. Using the second antenna at most doubles the throughput via the wireless connection.

In an embodiment, the uplink MIMO configuration is created dependent of a number of second antennas of the terminal device. The MIMO configuration may use any available second antenna of the terminal device.

In another embodiment, the dynamically created uplink MIMO configuration causes the terminal device to activate and deactivate, respectively, a plurality of second antennas of the terminal device, the uplink MIMO configuration defining each second antenna to be activated and deactivated, respectively. The uplink MIMO configuration may address any available second antenna independently yielding a maximum flexibility in optimizing the transmission of data with respect to throughput and energy consumption.

The terminal device may execute the uplink control module. The created uplink MIMO configuration is local.

Alternatively, the base transceiver station may execute the uplink control module and the created uplink MIMO configuration is transmitted to the terminal device via the wireless connection.

The created uplink MIMO configuration is preferably transmitted in a modified downlink control information, DCI, packet, the modified DCI packet comprising an additional uplink MIMO configuration field. The DCI packet is specified by 3GPP TS 38.214. The additional uplink MIMO configuration field may comprise an integer value wherein 0 indicates "no uplink MIMO", i.e. an inactive second antenna, 1 indicates "two layer uplink MIMO", i.e. exactly one active second antenna, 2 indicates "three layer uplink MIMO", i.e. exactly two active second antennas, and so forth.

Particularly, the uplink MIMO configuration is created upon receiving an uplink data rate request transmitted by the terminal device. The base transceiver station creates the uplink MIMO configuration for the terminal device only on demand which avoids an unnecessary load of the base transceiver station.

Another aspect of the invention is a terminal device, comprising a first antenna, and at least one second antenna. In other words, the terminal device is MIMO capable.

According to the invention, the terminal device comprises an uplink control module and is configured to carry out a method according to an embodiment of the invention together with a base transceiver station of a cellular network wherein the terminal device executes the uplink control module. The uplink control module may be implemented as a software module and/or a hardware module. The operation of the terminal device allows for short upload times and/or high uplink bitrates and an electric energy consumption of the terminal device as low as possible.

A third aspect of the invention is a computer program product, comprising a digital storage medium storing a program code. The digital storage medium comprises a compact disc, CD, a digital versatile disc, DVD, a universal serial bus, USB, stick, a hard drive, HD, a random access memory, RAM, a cloud storage and the like. The computer program product easily upgrades a terminal device.

According to the invention, the program code causes a computing device to carry out a method according to an embodiment of the invention as the terminal device together with a base transceiver station when being executed by a processor of the computing device. The program code allows short upload times and/or high uplink bitrates and an electric energy consumption of the terminal device as low as possible for the terminal device.

A fourth aspect of the invention is a base transceiver station, BTS, for a cellular network, comprising a plurality of antennas. In other words, the base transceiver station is MIMO capable.

According to the invention, the base transceiver station comprises an uplink control module and is configured to carry out a method according to an embodiment of the invention together with a terminal device. The uplink control module may be implemented as a software module and/or a hardware module. The base transceiver station allows short upload times and/or high uplink bitrates and an electric energy consumption as low as possible for the operation of the terminal device.

Preferably, the base transceiver is configured as a 5G base station, gNB. In other words, the base transceiver station is a 5G base station. The gNB is also called gNodeB and forms the base transceiver station of a 5G cellular network.

A fifth aspect of the invention is a computer program product, comprising a digital storage medium storing a program code. The digital storage medium comprises a compact disc, CD, a digital versatile disc, DVD, a universal serial bus, USB, stick, a hard drive, HD, a random access memory, RAM, a cloud storage and the like.

According to the invention, the program code causes a computing device to carry out a method according to an embodiment of the invention as the base transceiver station together with a terminal device when being executed by a processor of the computing device. The program code enables the base transceiver station to allow short upload times and/or high uplink bitrates and an electric energy consumption of the terminal device as low as possible for the terminal device.

An essential advantage of the inventive method is that it allows for both short upload times and/or high uplink bitrates and a low electric energy consumption of the terminal device which results in a satisfied user of the terminal device.

It shall be understood that the features described previously and to be described subsequently may be used not only in the indicated combinations but also in different combinations or on their own without leaving the scope of the present invention.

The invention is described in detail by means of exemplary embodiments and with reference to the drawings. Like components are indicated by like reference numerals throughout the drawings.
- Fig. 1: schematically shows a terminal device according to an embodiment of the invention;
- Fig. 2: schematically shows a base transceiver station according to an embodiment of the invention for a cellular network.

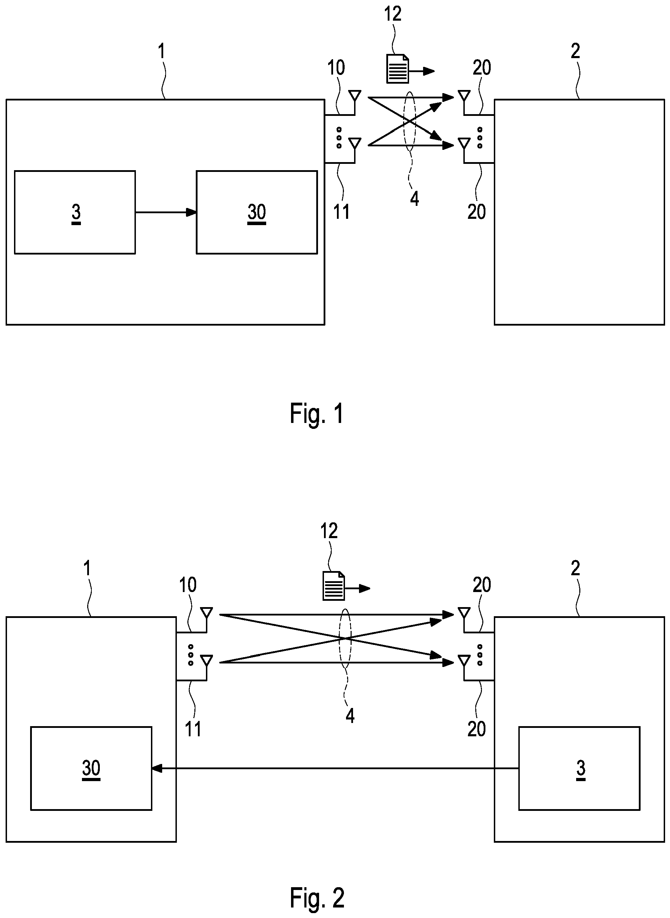

Fig. 1 schematically shows a terminal device 1 according to an embodiment of the invention. The terminal device 1 comprises a first antenna 10, at least one second antenna 11 and an uplink control module 3. The terminal device 1 is configured to carry out a method according to an embodiment of the invention set forth below together with a base transceiver station 2 of a cellular network.

The terminal device 1 may be implemented by a computer program product comprising a digital storage medium storing a program code. The program code causes a computing device to carry out the following method as the terminal device 1 together with a base transceiver station 2 when being executed by a processor of the computing device.

The terminal device 1 is operated as follows.

The terminal device 1 transmits data 12 to the base transceiver station 2, BTS, of the cellular network via a wireless connection 4 using the first antenna 10 of the terminal device 1.

The terminal device 1 executes the uplink control module 3.

The uplink control module 3 creates an uplink multiple input multiple output, MIMO, configuration 30 of the terminal device 1. The MIMO configuration 30 causes the terminal device 1 to activate and deactivate, respectively, a second antenna 11 of the terminal device 1 to be additionally used for transmitting the data 12 to the base transceiver station 2.

The created uplink MIMO configuration 30 may cause the terminal device 1 to activate the second antenna 11 when using only the first antenna 10 does not provide the currently needed bitrate and using additionally the second antenna 11 increases the bitrate. The created uplink MIMO configuration 30 may cause the terminal device 1 to deactivate the second antenna 11 when using only the first antenna 10 provides the currently needed bitrate or using additionally the second antenna 12 does not increase the bitrate.

The dynamically created uplink MIMO configuration 30 may cause the terminal device 1 to activate and deactivate, respectively, a plurality of second antennas 11 of the terminal device 1, the uplink MIMO configuration 30 defining each second antenna 11 to be activated and deactivated, respectively.

The uplink MIMO configuration 30 is dynamically created dependent on a determined current need for a bitrate of the wireless connection 4 and a determined current contribution of the second antenna to the currently needed bitrate of the wireless connection 4.

Determining the current need may comprise determining a current rate of the data 12 to be transmitted. Determining the current contribution may comprise determining a current load of the base transceiver station 2 and/or a current quality of the wireless connection 4.

Determining the current quality of the wireless connection 4 preferably comprises taking into account a number of radio resource blocks allocated to the wireless connection 4 by the base transceiver station 2, a transmission power applied by the terminal device 1 and/or the base transceiver station 2, a signal to interference and noise ratio, SINR, measured by the terminal device 1 and/or the base transceiver station 2, a channel quality indicator, CQI, provided by the terminal device 1, a reference signal received power, RSRP, measured by the terminal device 1, a MIMO rank indicator, MIMO RI, calculated by the terminal device 1 and/or the base transceiver station 2 and/or a priority assigned to the wireless connection 4 by the base transceiver station 2.

The uplink MIMO configuration 30 may be created dependent of a number of second antennas 11 of the terminal device 1.

Fig. 2 schematically shows a base transceiver station 2 according to an embodiment of the invention for a cellular network. The base transceiver station 2 may be configured as a 5G base station, gNB. The base transceiver station 2, BTS, for a cellular network, comprises a plurality of antennas 20 and an uplink control module 3. The base transceiver station2 is configured to carry out a method according to an embodiment of the invention set forth below together with a terminal device 1.

The base transceiver station 2 may be implemented by a computer program product comprising a digital storage medium storing a program code. The program code causes a computing device to carry out the following method as the base transceiver station 2 together with a terminal device 1 when being executed by a processor of the computing device.

The terminal device 1 is operated essentially as set forth above but differs in that the base transceiver station 2 executes the uplink control module 3 and the created uplink MIMO configuration 30 is transmitted to the terminal device 1 via the wireless connection 4. The created uplink MIMO configuration 30 may be transmitted in a modified downlink control information, DCI, packet, the modified DCI packet comprising an additional uplink MIMO configuration field. The uplink MIMO configuration 30 is created preferably upon receiving an uplink data rate request transmitted by the terminal device 1.

Of course, the inventive terminal device 1 and the inventive base transceiver station 2 may also be combined in which case either the uplink control module 3 of the terminal device 1 or the uplink control module 3 of the base transceiver station 2 is executed.

### Reference Numerals

- 1: terminal device, UE
- 10: first antenna
- 11: second antenna
- 12: data
- 2: base transceiver station, BTS
- 20: antenna
- 3: uplink control module
- 30: uplink multiple input multiple output, MIMO, configuration
- 4: wireless connection

## Claims

1. A method for operating a terminal device (1), wherein
- a terminal device (1) transmits data (12) to a base transceiver station (2), BTS, of a cellular network via a wireless connection (4) using a first antenna (10) of the terminal device (1);
- an uplink control module (3) creates an uplink multiple input multiple output, MIMO, configuration (30) of the terminal device (1) causing the terminal device (1) to activate and deactivate, respectively, a second antenna (11) of the terminal device (1) to be additionally used for transmitting the data (12) to the base transceiver station (2), the uplink MIMO configuration (30) being dynamically created dependent on a determined current need for a bitrate of the wireless connection (4) and a determined current contribution of the second antenna to the currently needed bitrate of the wireless connection (4).

2. The method according to claim 1, wherein the created uplink MIMO configuration (30) causes the terminal device (1) to activate the second antenna (11) when using only the first antenna (10) does not provide the currently needed bitrate and using additionally the second antenna (11) increases the bitrate and/or to deactivate the second antenna (11) when using only the first antenna (10) provides the currently needed bitrate or using additionally the second antenna (12) does not increase the bitrate.

3. The method according to claim 1 or 2, wherein determining the current need comprises determining a current rate of the data (12) to be transmitted and/or determining the current contribution comprises determining a current load of the base transceiver station (2) and/or a current quality of the wireless connection (4).

4. The method according to one of claims 1 to 3, wherein determining the current quality of the wireless connection (4) comprises taking into account a number of radio resource blocks allocated to the wireless connection (4) by the base transceiver station (2), a transmission power applied by the terminal device (1) and/or the base transceiver station (2), a signal to interference and noise ratio, SINR, measured by the terminal device (1) and/or the base transceiver station (2), a channel quality indicator, CQI, provided by the terminal device (1), a reference signal received power, RSRP, measured by the terminal device (1), a MIMO rank indicator, MIMO RI, calculated by the terminal device (1) and/or the base transceiver station (2) and/or a priority assigned to the wireless connection (4) by the base transceiver station (2).

5. The method according to one of claims 1 to 4, wherein the uplink MIMO configuration (30) is created dependent of a number of second antennas (11) of the terminal device (1).

6. The method according to one of claims 1 to 5, wherein the dynamically created uplink MIMO configuration (30) causes the terminal device (1) to activate and deactivate, respectively, a plurality of second antennas (11) of the terminal device (1), the uplink MIMO configuration (30) defining each second antenna (11) to be activated and deactivated, respectively.

7. The method according to one of claims 1 to 6, wherein the terminal device (1) executes the uplink control module (3).

8. The method according to one of claims 1 to 6, wherein the base transceiver station (2) executes the uplink control module (3) and the created uplink MIMO configuration (30) is transmitted to the terminal device (1) via the wireless connection (4).

9. The method according to claim 8, wherein the created uplink MIMO configuration (30) is transmitted in a modified downlink control information, DCI, packet, the modified DCI packet comprising an additional uplink MIMO configuration field.

10. The method according to claim 8 or 9, wherein the uplink MIMO configuration (30) is created upon receiving an uplink data rate request transmitted by the terminal device (1).

11. A terminal device (1), comprising a first antenna (10), at least one second antenna (11) and an uplink control module (3) and being configured to carry out a method according to claim 7 together with a base transceiver station (2) of a cellular network.

12. A computer program product, comprising a digital storage medium storing a program code, the program code causing a computing device to carry out a method according to claim 7 as the terminal device (1) together with a base transceiver station (2) when being executed by a processor of the computing device.

13. A base transceiver station (2), BTS, for a cellular network, comprising a plurality of antennas (20) and an uplink control module (3) and being configured to carry out a method according to one of claims 8 to 10 together with a terminal device (1).

14. The base transceiver station according to claim 13, configured as a 5G base station, gNB.

15. A computer program product, comprising a digital storage medium storing a program code, the program code causing a computing device to carry out a method according to one of claims 8 to 10 as the base transceiver station (2) together with a terminal device (1) when being executed by a processor of the computing device.
